# EUROPEAN PATENT SPECIFICATION

(11) **EP 0 951 857 B1**
(45) Date of publication and mention of the grant of the patent: **05.05.2010**
(21) Application number: 99200921.7
(22) Date of filing: 25.03.1999
(51) Int. Cl.: A47L 11/10, B62D 7/14

(54) **Apparatus for cleaning floors**
Gerät zum Reinigen von Fussböden
Dispositif pour le nottoyage de sols

(30) Priority: 24.04.1998 EP 98201341
(43) Date of publication of application: 27.10.1999
(73) Proprietor: JohnsonDiversey, Inc., Sturtevant, Wisconsin 53177-0902 (US)
(72) Inventor: Eckerlein, Uwe, 9542 Munchwilen (TG) (CH); Mayer, Heinrich, 9542 Munchwilen (TG) (CH)
(74) Representative: Ruschke, Hans Edvard

(56) References cited:
- EP-A- 0 291 844
- EP-A- 0 662 301
- FR-A- 2 576 861
- US-A- 5 033 763

## Description

### Field of the invention

the present invention relates to an apparatus for cleaning floors, comprising an undercarriage including front and rear axles bearing at least one wheel, a driver's seat, steering means connected to one of said axles for steering said apparatus, front cleaning means near the front axle for carrying out a first cleaning step and rear cleaning means for carrying out a second cleaning step.

### Background of the invention

Such apparatus is known in various embodiments. These prior art apparatus have either front axle steering or rear axle steering. In both cases the area covered by the rear cleaning means does not coincide with that of the front cleaning means if the apparatus makes a turn, for example around obstacles. This makes it necessary to move back and forth in such areas in order to complete the cleaning operation. As an alternative, the rear cleaning means can be made wider than the front cleaning means so as to obtain complete coverage by the rear cleaning means. However, this increases the total width of the apparatus making it more difficult to handle, especially in areas with obstacles which may interfere with the protruding rear cleaning means.

European Patent Application EP 0291844 A2 represents the closest prior art on which the pre-characterizing part of claim 1 is based. It discloses a street sweeper machine having front and rear wheels which are steerable and adapted to define an intersect point for the axes of said wheels when driving around corners. Said intersect point lies proximate a continuation of a symmetry axis of a roll brush serving as a rear cleaning means.

The object of the present invention is to remove the previously described problems in an effective way. To obtain the object, the invention provides an apparatus according to claim 1.

### Detailed description of the invention

Due to the all wheel steering configuration of the apparatus of the invention, it is possible to allow the areas covered by the rear and front cleaning means to substantially coincide, also when the apparatus is turning through a curve. As a result of the all wheel steering the machine becomes very agile in turning, whereas the width of the rear cleaning means can be reduced, preferably to the width of the front cleaning means. Obstacles may be passed very accurately as the rear cleaning means does not protrude beyond the front cleaning means in lateral direction, while they both follow substantially the same path.
In a preferred embodiment the steering means is connected to the front axle and the rear axle is coupled to the front axle by coupling means.

This main steering through the front axle is similar to the steering of a car or bicycle and is therefore much easier to most people than rear axle steering.
The most simple way to operatively connect the front and rear axles is through mechanical coupling means. However, a technically more advanced manner of coupling is through electronic, electric, hydraulic or pneumatic coupling means which enable a variable connection between the front and rear axles to further optimize the coverage of the front and rear cleaning means.

The invention will hereafter be elucidated with reference to the drawing showing an embodiment of the invention by way of example.
Fig. 1 is a very schematic illustration of the operation of the apparatus according to the invention, in plan view.
Fig. 2 is a view corresponding to that of fig. 1 showing the mechanical connection between the front and rear axles. The drawing shows an embodiment of an apparatus for cleaning floors, in this case for wet cleaning smooth floor surfaces, in particularly in public and utility buildings.

The apparatus comprises an undercarriage including a front axle 1, in this case supporting one front wheel 2, as well as a rear axle 3 supporting two rear wheels 4. The undercarriage carries a frame or body 14 supporting at least a driver's seat and steering means such as a steering wheel. These latter parts are not shown in the drawing, since they are known in the prior art and do not form part of the present invention.
The steering means is connected to the front axle 1 so that the apparatus can be manoeuvered in a way similar to normal cars, bicycles or the like. The apparatus may be driven by an engine or electric or hydraulic motor coupled to the front or rear axle 1, 3. Alternatively, the apparatus may be brush-driven.

The cleaning apparatus is of the type carrying out two cleaning steps, including a first wetting and scrubbing step performed by front cleaning means 5, in this case positioned directly behind the front axle 1. This front cleaning means 5 may include scrubbing brushes of any kind, as well as fluid sprayers or the like to spray cleaning fluid on the floor to allow scrubbing of the floor in a wet condition. The second cleaning step is a drying step which is performed by rear cleaning means 6 positioned directly behind the rear axle 3 and including wiping and/or sucking means to squeegee the wet floor.

According to the present invention, not only the front axle 1 makes steering movements, but also the rear axle 3. This is illustrated by the angle α between the axis of the rear axle 3 and the longitudinal axis 7 of the frame, said angle α differing from 90°. The rear axle 3 moves in a direction of rotation opposite to that of the front axle 1. The rear cleaning means 6 moves in unison with the rear axle 3. The turning center 8 of the apparatus when driving through a curve is positioned in a point in between the front and rear axles 1 and 3 of the apparatus.

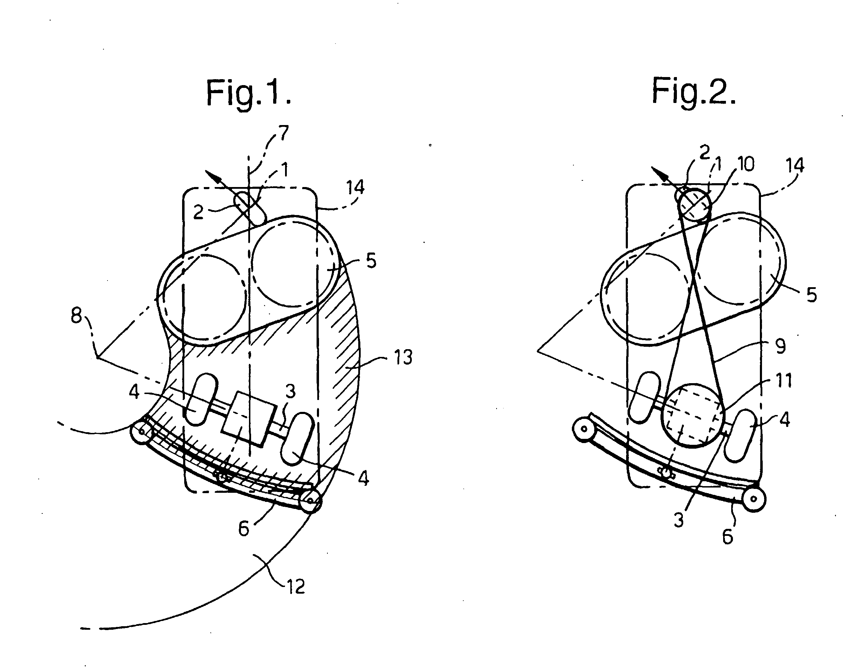

Fig. 2 illustrates the connection between the front and rear axles 1 and 3, which are coupled, in this case, through mechanical coupling means in the form of a flexible endless coupling member 9, such as a cable, belt, chain or the like guided in non-slipping fashion around guide wheels 10 and 11 rotatably fixed to the respective axle 1 and 3 at the position of the steering axis thereof. When the coupling member 9 is constructed as a cable or belt, the guide wheels 10 and 11 will be constructed as pulleys, whereas a chain as coupling member 9 will require the guide wheels 10 and 11 to be constructed as sprockets. In order to allow the axles 1 and 3 to counter-rotate when making a curve, the endless coupling member 9 is guided in the shape of an "8". The diameter of the guide wheels 10 and 11 are related such that a transmission ratio of the steering movements of the front and rear axles 1 and 3 is obtained with which the path followed by the rear cleaning means 6 substantially coincides with the path followed by the front cleaning means 5. The paths of the cleaning means 5 and 6 will also be determined by their position with respect to the axles 1 and 3, so that the transmission ratio should be adapted to the respective positions. For example, the front cleaning means 5 could also be positioned in front of the front axle 1 and then the transmission ratio will differ substantially from the appr. 2:1 ratio of the coupling means 9 shown in the drawing. Preferably, the steering movements of the rear axle 3 are kept to a minimum in order to minimize the disturbance of the front wheel steering feel to the driver.

As is shown in fig. 1, the sucked area 12 of the rear cleaning means 6 completely covers the scrubbed and wetted area 13 of the front cleaning means 5 when the apparatus is moving through a curve. The wetted area can thus be completely sucked dry during the same run. This is obtained with rear cleaning means 6 which is only slightly wider than the front cleaning means 5.

If the coupling means of the front and rear axles 1 and 3 is an electronic, electric, hydraulic or pneumatic coupling means (or a combination thereof) allowing a variable transmission ratio or connection between the front and rear axles 1 and 3 as a function of the steering angle, then it is possible to maintain a complete coverage of the front and rear cleaning means 5 and 6 through all kinds of curves, even if they are of equal width.

The cleaning apparatus according to the invention allows easy and complete wet cleaning of floors in a very efficient manner, whereas the apparatus can be steered very easily around obstacles since the front and rear cleaning means follow the same path.

The invention is not restricted to the embodiment shown in the drawing and described herein before, which may be varied in different manners within the scope of the invention.

## Claims

1. Apparatus for cleaning floors comprising an undercarriage including front and rear axles (1, 3) bearing at least one wheel (2, 4), a driver's seat and steering means connected to one of said axles (1, 3) for steering said apparatus, front cleaning means (5) near the front axle (1) for carrying out a first cleaning step and rear cleaning means (6) for carrying out a second cleaning step, wherein the steering means is connected to the front axle (1) and the rear axle (3) is coupled to the front axle by mechanical coupling means (9) in order to steer both axles in a predetermined relationship, such that the front and rear cleaning means (5, 6) follow substantially the same path the coupling
**characterized in that** the mechanical coupling means (9) includes a flexible endless coupling member, such as a cable, belt, chain or the like, guided around guide wheels (10, 11) rotatably fixed to the respective axles (1, 3) at the position of the steering axes thereof.

2. Apparatus according to claim 1, wherein the front and rear axles are operatively connected to rotate in opposite directions, and the rotation of the rear axle is preferably less than the rotation of the front axle.

3. Apparatus according to one of the preceding claims, wherein the front cleaning means (5) is positioned behind the front axle (1), and the rear cleaning means (6) is positioned behind the rear axle (3).

4. Apparatus according to one of the preceding claims, wherein the rear cleaning means (6) follows steering movements of the rear axle (3).

5. Apparatus according to one of the preceding claims, wherein the width of the rear cleaning means (6) is substantially equal to the width of the front cleaning means (5).

6. Apparatus according to one of the preceding claims, wherein the front axle (1) supports one wheel (2) and the rear axle (3) supports two wheels (4).

7. Apparatus according to one of the preceding claims, wherein the front cleaning means (5) comprises scrubbing elements and fluid sprayers, and the rear cleaning means (6) comprises wiping and/or suction elements.

## Patentansprüche

1. Apparat zum Reinigen von Böden mit einem Fahrwerk, das Vorder- und Hinterachsen (1, 3) umfasst, die mindestens ein Rad (2, 4) tragen, einem Fahrersitz und einem Lenkmittel, das mit einer der Achsen (1, 3) zum Steuern des Apparats verbunden ist, einem vorderen Reinigungsmittel (5) nahe der Vorderachse (1) zum Ausführen eines ersten Reinigungsschritts und mit einem hinteren Reinigungsmittel (6) zum Ausführen eines zweiten Reinigungsschritts, wobei das Lenkmittel mit der Vorderachse (1) verbunden ist und die Hinterachse (3) mit der Vorderachse über mechanische Kopplungsmittel (9) verbunden ist, um beide Achsen in einem vorbestimmten Verhältnis zu steuern, sodass die vorderen und hinteren Reinigungsmittel (5, 6) im Wesentlichen dem selben Pfad folgen,
**dadurch gekennzeichnet, dass** die mechanischen Kopplungsmittel (9) ein flexibles Endloskopplungsmittel umfassen, wie etwa ein Kabel, einen Riemen, eine Kette oder dergleichen, das um Führungsräder (10, 11) geführt ist, die drehbar an den jeweiligen Achsen (1, 3) am Ort der Steuerungsachsen befestigt sind.

2. Apparat nach Anspruch 1, bei dem die Vorder- und Hinterachsen operativ verbunden sind, um in entgegengesetzte Richtungen zu drehen, und die Drehung der Hinterachse vorzugsweise geringer ist als die Drehung der Vorderachse.

3. Apparat nach einem der vorhergehenden Ansprüche, bei dem das vordere Reinigungsmittel (5) hinter der Vorderachse (1) angeordnet ist und das hintere Reinigungsmittel (6) hinter der Hinterachse (3) angeordnet ist.

4. Apparat nach einem der vorhergehenden Ansprüche, bei dem das Reinigungsmittel (6) den Steuerungsbewegungen der Hinterachse (3) folgt.

5. Apparat nach einem der vorhergehenden Ansprüche, bei dem die Breite des hinteren Reinigungsmittels (6) im Wesentlichen gleich der Breite des vorderen Reinigungsmittels (5) ist.

6. Apparat nach einem der vorhergehenden Ansprüche, bei dem die Vorderachse (1) ein Rad (2) und die Hinterachse (3) zwei Räder (4) trägt.

7. Apparat nach einem der vorhergehenden Ansprüche, bei dem das vordere Reinigungsmittel (5) Schruppelemente und Fluidsprüher und das hintere Reinigungsmittel (6) Wisch- und / oder Saugelemente umfasst.

## Revendications

1. Dispositif de nettoyage de sols comprenant un châssis roulant incluant des axes avant et arrière (1, 3) supportant au moins une roue (2, 4), un siège de conducteur et des moyens de direction reliés à l'un desdits axes (1, 3) pour diriger ledit dispositif, des moyens de nettoyage avant (5) près de l'axe avant (1) pour réaliser une première étape de nettoyage et des moyens de nettoyage arrière (6) pour réaliser une seconde étape de nettoyage,
dans lequel les moyens de direction sont reliés à l'axe avant (1) et l'axe arrière (3) est couplé à l'axe avant par des moyens de couplage mécaniques (9), afin de diriger les deux axes dans une relation prédéterminée, de telle manière que les moyens de nettoyage avant et arrière (5, 6) suivent sensiblement le même chemin,
**caractérisé en ce que** les moyens de couplage mécaniques (9) incluent un élément de couplage sans fin flexible, comme un câble, une courroie, une chaine ou autre, guidé autour de roues de guidage (10, 11) fixées à rotation sur les axes respectifs (1, 3) dans la position de leurs axes de direction.

2. Dispositif selon la revendication 1, dans lequel les axes avant et arrière sont connectés fonctionnellement pour tourner dans des directions opposées, et la rotation de l'axe arrière est de préférence inférieure à la rotation de l'axe avant.

3. Dispositif selon l'une quelconque des revendications précédentes, dans lequel les moyens de nettoyage avant (5) sont positionnés derrière l'axe avant (1), et les moyens de nettoyage arrière (6) sont positionnés derrière l'axe arrière (3).

4. Dispositif selon l'une quelconque des revendications précédentes, dans lequel les moyens de nettoyage arrière (6) suivent les mouvements directionnels de l'axe arrière (3).

5. Dispositif selon l'une quelconque des revendications précédentes, dans lequel la largeur des moyens de nettoyage arrière (6) est sensiblement égale à la largeur des moyens de nettoyage avant (5).

6. Dispositif selon l'une quelconque des revendications précédentes, dans lequel l'axe avant (1) supporte une roue (2) et l'axe arrière (3) supporte deux roues (4).

7. Dispositif selon l'une quelconque des revendications précédentes, dans lequel les moyens de nettoyage avant (5) comprennent des éléments de lavage et des pulvérisateurs de fluide, et les moyens de nettoyage arrière (6) comprennent des éléments de balayage et/ou d'aspiration.
